(19) Europäisches Patentamt / European Patent Office / Office européen des brevets

(11) **EP 1 811 764 A2**

(12) **EUROPEAN PATENT APPLICATION**

(43) Date of publication:
**25.07.2007 Bulletin 2007/30**

(51) Int Cl.:
**H04N 1/50** (2006.01)

(21) Application number: **06126063.4**

(22) Date of filing: **13.12.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (71) Applicant: **Samsung Electronics Co., Ltd.**<br>**Yeongtong-gu**<br>**Suwon-city, Gyeonggi-do 442-742 (KR)** |
| (30) Priority: **20.01.2006 KR 20060006288** | (72) Inventor: **An, Seung-deog**<br>**Yongin-sin, Gyeonggi-do, (KR)**<br><br>(74) Representative: **Waddington, Richard**<br>**Appleyard Lees,**<br>**15 Clare Road**<br>**Halifax HX1 2HY (GB)** |

(54) **Printer including unit for detecting color registration error and method of detecting color registration error**

(57)    A printing apparatus and method of detecting a color registration error are provided. A detecting unit detects registration marks comprising a plurality of toner marks. The registration marks are formed on a transfer medium to detect color registration errors of color images. Each toner mark of the registration marks includes a first component inclined with respect to a main scanning direction and a sub-scanning direction, a second component spaced apart from the first component in the sub-scanning direction, and inclined with respect to the first component, and a third component parallel to one of the first component and the second component.

FIG. 4

**Description**

The present invention relates to a printer including a unit for detecting color registration errors and a method of detecting the color registration errors. More particularly, the present invention relates to a printing apparatus including a unit for detecting a color registration error and a method of detecting a color registration error, which is not affected by a change in velocities of a photosensitive medium and a transfer medium.

Printing apparatuses, such as printers and copying machines, print a desired image by forming an electrostatic latent image on a photosensitive medium which is charged at a constant electric potential by an exposing device. The desired image is also printed by forming a toner image by developing the electrostatic latent image using a developing unit, transferring the toner image on a recording medium directly or indirectly through an intermediate transfer medium, and fusing the toner image on the recording medium by heating and pressing the toner image.

A full-color image, is printed by forming a color image, in which yellow (Y), cyan (C), magenta (M), and black (K) toner images overlap with each other. In order to provide a high quality image, printing processes should be controlled precisely so that the toner images of various colors overlap with each other accurately. Thus, detection of color registration errors is required for appropriate adjustment of the printing apparatus being used.

Registration marks are formed on a transfer medium. The registration marks are detected using a sensor, and a color registration error is calculated using a time difference between the detection of the registration marks. While the sensor detects the registration marks, velocities of the photosensitive medium and the transfer medium should be constant. If the velocities of the photosensitive medium and the transfer medium vary during the detection of the registration marks, the color registration error cannot be calculated accurately.

Accordingly, there is a need for an improved system and method for detecting a color registration error, which is not affected by a change in velocities of a photosensitive medium and a transfer medium.

An object of the present invention is to address at least the above problems and/or disadvantages and to provide at least the advantages described below.

The present invention provides a printing apparatus including a unit for detecting a color registration error and a method of detecting a color registration error, which is not affected by a change in velocities of a photosensitive medium and a transfer medium.

According to the present invention there is provided an apparatus and method as set forth in the appended claims. Preferred features of the invention will be apparent from the dependent claims, and the description which follows.

According to an aspect of the present invention, a printing apparatus including one or more electrostatic latent image forming units, a plurality of developing units, a transfer medium and a color registration error detecting unit is provided. Preferably, the electrostatic latent image forming units are operable to form electrostatic latent images on a photosensitive medium. Preferably, the plurality of developing units are operable to develop the electrostatic latent images to form a plurality of toner images. Preferably, the plurality of toner images are operable to be transferred onto the transfer medium. Preferably, the color registration error detecting unit is operable to detect registration marks comprising a plurality of toner marks formed on the transfer medium in order to detect color registration errors of color images. Each toner mark of the registration mark preferably includes a first, second and third component. The first component is preferably inclined with respect to a main scanning direction (X) and a sub-scanning direction. The second component is preferably spaced apart from the first component in the sub-scanning direction, and inclined with respect to the first component. The third component is preferably parallel to the first component or the second component.

According to another aspect of the present invention, a method of detecting a color registration error of a printing apparatus is provided. One or more electrostatic latent image forming units are preferably operable to form electrostatic latent images on a photosensitive medium. A plurality of developing units are preferably operable to develop the electrostatic latent images to form a plurality of toner images. The plurality of toner images are preferably operable to be transferred onto a transfer medium.

According to the method, a first registration mark comprising a plurality of toner marks is preferably formed, each of which includes a first component inclined with respect to a main scanning direction and a sub-scanning direction. A second component is preferably spaced apart from the first component in the sub-scanning direction, and inclined with respect to the first component. A third component is preferably parallel to the first component or the second component, and moves in the sub-scanning direction on the transfer medium. The first, second, and third components of a plurality of toner marks are preferably detected using a sensor facing the transfer medium. A compensation is preferably made for detection time differences of the first and second components in the plurality of toner marks by removing a detection error that is generated due to a variance in velocity of the photosensitive medium and the transfer medium from the detection time differences of the first and second components in the plurality of toner marks, based on the fact that ratios between the detection time difference between the first and second components, the detection time difference between the first and third components, and the detection time difference between the second and third components are not affected by the variance in velocity of the photosensitive medium and the transfer medium. Color registration errors of the plurality of toner images in the main scanning direction are preferably calculated using the compensated detection time differences of the first and second components of the plurality of toner marks.

Preferably, ratio is defined and a value is set to compensate for the detection time differences between the first and second components. A ratio is preferably defined between the larger one of the detection time difference of the first and third components and the detection time difference of the second and third components, and a reference value as a compensation ratio. A set value is preferably obtained by multiplying the detection time differences of the first and second components of the plurality of toner marks by the compensation ratio, as the compensated detection time differences of the first and second components of the plurality of toner marks. The larger one of the detection time differences of the first and third components and of the second and third components in one of the plurality of toner marks may be set as the reference value. A designated value of the larger one of the detection time differences of the first and third components and of the second and third components of the plurality of toner marks may be set as the reference value.

The method may also comprise a second registration mark that is formed and the compensation for detection time differences. The second registration mark preferably comprises a plurality of toner marks spaced a distance apart from the first registration mark in the main scanning direction. A compensation is preferably made for the detection time differences of the first and second components in the plurality of toner marks of the second registration mark. A printing width error is calculated from the compensated detection time differences of the first and second components in the first and second registration marks.

Other objects, advantages and salient features of the invention will become apparent to those skilled in the art from the following detailed description, which, taken in conjunction with the annexed drawings, discloses exemplary embodiments of the invention.

For a better understanding of the invention, and to show how embodiments of the same may be carried into effect, reference will now be made, by way of example, to the accompanying diagrammatic drawings in which:

FIG. 1 is a block diagram of a single-path printing apparatus according to an exemplary embodiment of the present invention;

FIG. 2 is a block diagram of a single-path printing apparatus according to another exemplary embodiment of the present invention;

FIG. 3 is a block diagram of a multi-path printing apparatus according to an exemplary embodiment of the present invention;

FIG. 4 is a diagram of a sensor and registration marks included in a printing apparatus according to an exemplary embodiment of the present invention;

FIG. 5 is a block diagram of a color registration error detecting unit according to an exemplary embodiment of the present invention;

FIG. 6 is a diagram illustrating a principle of calculating color registration errors of registration marks according to an exemplary embodiment of the present invention;

FIG. 7 is a diagram illustrating processes of detecting an error in a main-scanning direction according to an exemplary embodiment of the present invention;

FIG. 8 is a diagram illustrating an influence of variations in velocities of the photosensitive drum and a transfer belt on a color registration error in a main-scanning direction according to an exemplary embodiment of the present invention;

FIG. 9 is a diagram illustrating a principle of calculating a color registration error in a main-scanning direction in consideration of a variance of the velocities of a photosensitive drum and a transfer belt according to an exemplary embodiment of the present invention; and

FIGS. 10 through 13 are diagrams of modified examples of registration marks according to exemplary embodiments of the present invention.

Throughout the drawings, the same drawing reference numerals will be understood to refer to the same elements, features and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions an constructions are omitted for clarity and conciseness.

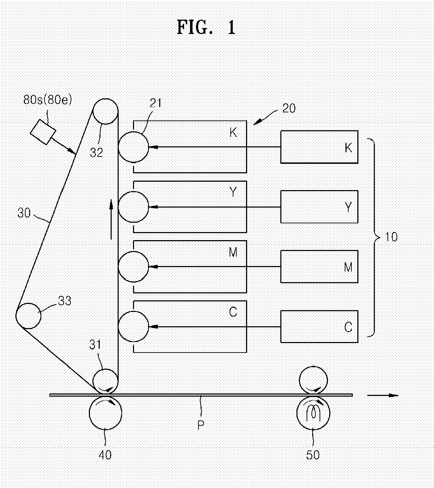

FIG. 1 is a block diagram of a printing apparatus according to an exemplary embodiment of the present invention. Referring to FIG. 1, the printing apparatus includes exposing devices (electrostatic latent image forming units) 10C, 10M, 10Y, and 10K, four developing units 20C, 20M, 20Y, 20K, which include cyan (C), magenta (M), yellow (Y), and black (K) toners, respectively, a transfer belt (transfer medium) 30, a transfer roller 40, and a fuser 50. The transfer belt 30 is supported by supporting rollers 31, 32, and 33 and is circulated around the supporting rollers 31, 32, and 33. A transfer drum (not shown) may also be used instead of the transfer belt as the transfer medium. The exposing devices 10C, 10M, 10Y, and 10K include polygonal mirrors deflecting light emitted in a main scanning direction from a light source, and reflection mirrors for adjusting a path of the deflected light.

Light corresponding to image information of color C is irradiated onto a photosensitive drum 21, which is a photosensitive medium, of the developing unit 20C by the exposing device 10C to form an electrostatic latent image, wherein the photosensitive drum 21 is charged to a constant electric potential. The cyan (C) toner included in the developing unit 20C is attached onto the electrostatic latent image to form a toner image of color C. The C toner image is transferred onto the transfer belt 30 using a transfer bias applied to the transfer roller 40.

Light corresponding to image information of color M is irradiated onto a photosensitive drum 21, which is a photosensitive medium, of the developing unit 20M by the exposing device 10M to form an electrostatic latent image, wherein the photosensitive drum 21 is charged to a constant electric potential. The magenta (M) toner included in the developing unit 20M is attached onto the electrostatic latent image to form a toner image of color M. The M toner image is transferred onto the transfer belt 30. According to an exemplary implementation, the time at which the exposing device 10M is initiated is controlled so that the transfer of the M toner image onto the transfer belt 30 is initiated exactly when a front edge of the C toner image reaches the portion where the photosensitive drum 21 of the developing unit 20M and the transfer belt 30 contact. Therefore, the M toner image and the C toner image overlap exactly.

Toner images of Y and K colors are also transferred onto the transfer belt 30 using the same processes as above, and thus, a color image, in which the toner images of colors C, M, Y, and K overlap with each other, is formed on the transfer belt 30. The color image is transferred onto the paper (P) passing between the transfer roller 40 and the supporting roller 31. When the paper (P) passes through the fuser 50, the color image is fused on the paper (P) by heat and pressure, and all color printing processes are complete.

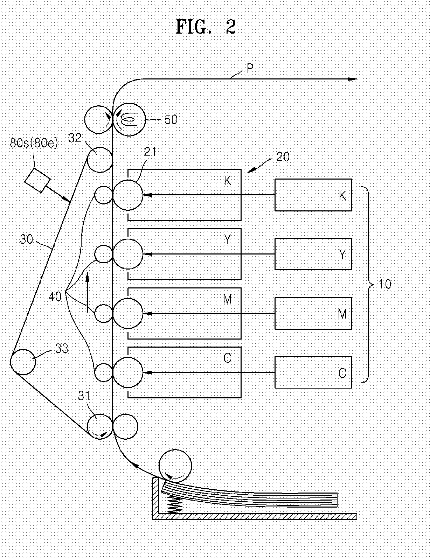

FIG. 2 is a block diagram of a single-path printing apparatus according to another exemplary embodiment of the present invention. Referring to FIG. 2, the paper (P) is drawn by the electrostatic force of the transfer belt 30 to be conveyed by the transfer belt 30, and the toner image is directly transferred from the photosensitive drum 21 to the paper (P) by a transfer bias applied to the transfer roller 40.

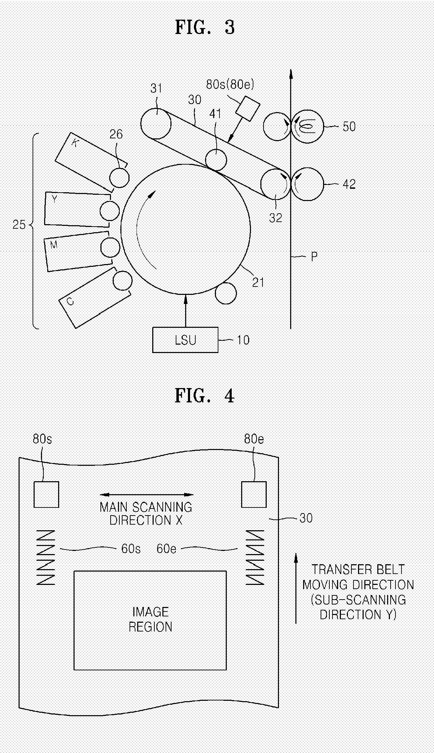

The printing apparatuses of FIGS. 1 and 2 are single-path printing apparatuses. FIG. 3 is a block diagram of a multi-path printing apparatus according to an exemplary embodiment of the present invention. Referring to FIG. 3, the multi-path printing apparatus includes a photosensitive drum 21, an exposing device 10 and four developing units 25. Unlike the previous exemplary embodiments of the present invention shown in FIGS. 1 and 2, the photosensitive drum 21 is not included in the developing units 25 according to an exemplary embodiment of the present invention. In an exemplary embodiment of the present invention, a developing roller 26 faces the photosensitive drum 21. Light corresponding to image information of color C is irradiated onto the photosensitive drum 21 by the exposing device 10 to form an electrostatic latent image, wherein the photosensitive drum 21 is charged to a constant electric potential. A toner of color C included in the developing unit 25C is attached onto the electrostatic latent image to form a C toner image. The C toner image is transferred onto the transfer belt 30 by a first transfer bias applied to the first transfer roller 41. Then, light corresponding to image information of color M is irradiated onto the photosensitive drum 21 by the exposing device 10 to form an electrostatic latent image, wherein the photosensitive drum 21 is re-charged to the previous constant electric potential. A toner of Color M included in the developing unit 25M is attached onto the electrostatic latent image to form a toner image of Color M. The M toner image is transferred onto the transfer belt 30 by the first transfer bias. Y and K toner images are also transferred onto the transfer belt 30 through the above processes. Therefore, a color image, in which C, M, Y, and K toner images exactly overlap with each other, is formed on the transfer belt 30. The color image is transferred onto the paper (P) passing between the transfer belt 30 and a second transfer roller 42. When the paper (P) passes through the fuser 50, the color image is fused on the paper (P) by heat and pressure of the fuser 50, and all color printing processes are complete.

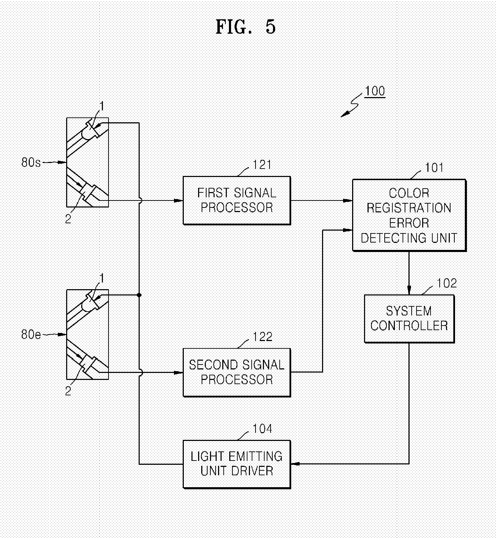

The C, M, Y, and K toner images on the transfer belt 30 should precisely overlap with each other. To do this, the printing apparatus includes a unit for detecting color registration errors. FIG. 4 is a diagram of a sensor and registration marks included in the printing apparatus according to an exemplary embodiment of the present invention. FIG. 5 is a block diagram of a color registration error detecting unit according to an exemplary embodiment of the present invention.

Referring to FIGS. 4 and 5, a system controller 102, included in a color registration error detecting unit 100, controls the exposing device 10 and the developing unit 20 to form a first registration mark 60s on the transfer belt 30 in order to detect a color registration error. In addition, the system controller 102 further forms a second registration mark 60e spaced a distance apart from the first registration mark 60s in a main scanning direction X in order to detect a magnification error, which is a printing width error, in the main scanning direction X. The first and second registration marks 60s and 60e are identical or symmetrical. Sensors 80s and 80e face the transfer belt 30 to detect the first and second registration marks 60s and 60e. Light is irradiated onto the first and second registration marks 60s and 60e by light emitting units 1 of the sensors 80s and 80e. A light emitting unit driver 104 constantly controls the light intensity irradiated by the light emitting units 1 of the sensors 80s and 80e. The light reflected by the first and second registration marks 60s and 60e is detected by photodetectors 2 of the sensors 80s and 80e. First and second signal processors 121 and 122 convert and amplify the detected signal into a current signal or a voltage signal if necessary. The first and second signal processors 121 and 122 also remove noise. A color registration error calculator 101 calculates the color registration error based on the detected signals and sends it to the system controller 102. The system controller 102 receives the color registration error to control the printing apparatus. That is, the system controller 102 performs system controlling operations such as controlling the time at which the exposing devices 10C, 10M, 10Y, and 10K are initiated, and controlling the driving speed of the transfer belt 30 based on the color registration error.

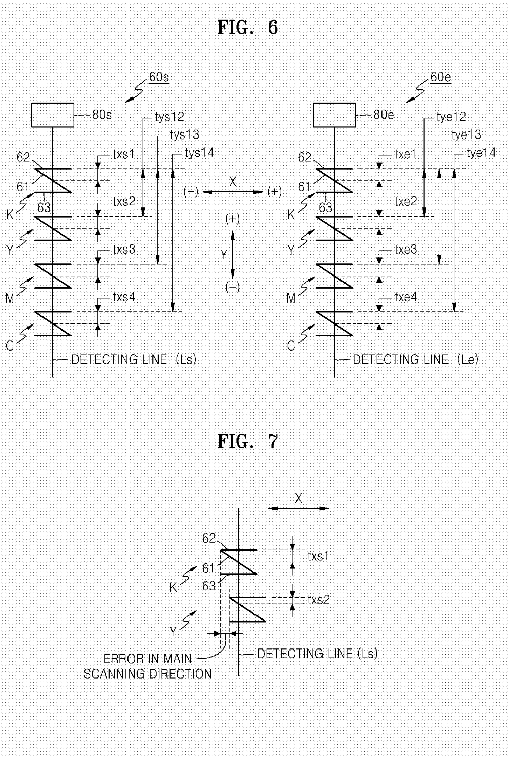

FIG. 6 is a diagram illustrating examples of registration marks according to an exemplary embodiment of the present invention. Referring to FIG. 6, the first and second registration marks 60s and 60e each include a first component 61 inclined with respect to the main scanning direction X and a sub-scanning direction Y, and a second component 62 inclined with respect to the first component 61 and spaced apart from the first component 61 in a sub-scanning direction Y, respectively.

When the transfer belt 30 moves in the sub-scanning direction Y, the sensors 80s and 80e detect the first and second registration marks 60s and 60e along detecting lines Ls and Le, respectively. In the first registration mark 60s, differences between the times of detecting first components 61 and second components 62 in first, second, third, and fourth toner marks K, Y, M, and C are respectively txs1, txs2, txs3, and txs4. Also, differences between the times of detecting second components 62 of the first and second toner marks K and Y, of the first and third toner marks K and M, and of the first and fourth toner marks K and C in the first registration mark 60s are respectively tys12, tys13, and tys14. In the second registration mark 60e, differences between the times of detecting first components 61 and second components 62 of first, second, third, and fourth toner marks K, Y, M, and C are respectively txe1, txe2, txe3, and txe4. Also, differences between the times of detecting second components 62 of the first and second toner marks K and Y, of the first and third toner marks K and M, and of the first and fourth toner marks K and C in the second registration mark 60e are respectively tye12, tye13, and tye14. The color registration error includes an error in the main scanning direction X (X-OFFSET), an error in the sub-scanning direction Y (Y-OFFSET), a printing width error, and an inclination of the main scanning direction X (SKEW).

FIG. 7 is a diagram illustrating processes of detecting the error in a main-scanning direction X according to an exemplary embodiment of the present invention. Processes of detecting the error in the main scanning direction X are described as follows. If there is no error in the main scanning direction X, txs1 and txs2 should be similar to each other. According to FIG. 7, if there is an error in the main scanning direction X, the first and second toner marks K and Y are offset from each other in the X direction, and thus, the error in the main scanning direction X can be obtained by calculating txs1 - txs2. Also, the errors between the first and third toner marks K and M, and between the first and fourth toner marks K and C may be obtained by calculating txs1-txs3 and txs1-txs4, respectively. The above calculation is a method of calculating the errors of the second through fourth toner marks Y, M, and C in the main scanning direction X based on the first toner mark K. When the error in the main scanning direction X is calculated based on the reference value tx, the errors of the first through fourth toner marks K, Y, M, and C in the main scanning direction X may be calculated as tx-txs1, tx-txs2, tx-txs3, and tx-txs4, respectively.

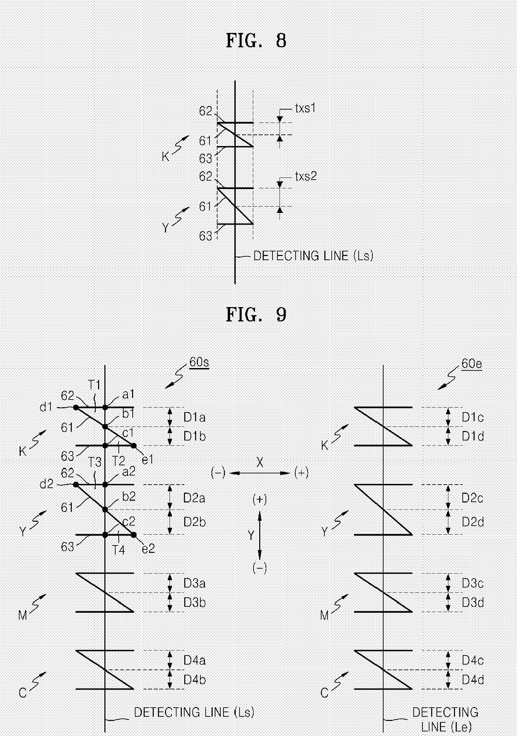

FIG. 8 is a diagram illustrating an influence of variations in velocities of the photosensitive drum and a transfer belt on a detected color registration error in the main-scanning direction according to an exemplary embodiment of the present invention. The error in the main scanning direction X is precisely calculated if the rotating speed of the photosensitive drum 21 and the velocity of the transfer belt 30 should be constant during the detection of the first through fourth toner marks K, Y, M, and C. Once the first toner mark K has been detected, values of txs1 and txs2 will be different from each other even if there is no error in the main scanning direction X if the rotating speed of the photosensitive drum 21 and the velocity of the transfer belt 30 change during the detection of the second toner mark Y. For example, if the rotating speed of the photosensitive drum 21 and the velocity of the transfer belt 30 are lower during detection of the second toner mark Y compared to the detection of the first toner mark K, txs2 will be larger than txs1 as shown in FIG. 8, and thus, the color registration error calculator 101 wrongly calculates that there is an error in the main scanning direction X by calculating txs1-txs2. In order to calculate the error in the main scanning direction X precisely even if the rotating speed of the photosensitive drum 21 and the velocity of the transfer belt 30 vary, the first and second registration marks 60s and 60e further include a third component 63, respectively. The third component 63 is parallel to the first component 61 or the second component 62. In the exemplary embodiment of the present invention, the third component 63 is parallel to the second component 62.

FIG. 9 is a diagram illustrating a principle of calculating the color registration error in the main-scanning direction in consideration of a variance of the velocities of the photosensitive drum and the transfer belt according to an exemplary embodiment of the present invention. In FIG. 9, points where the first, second, and third components 61, 62, and 63 of the first toner mark K cross the detecting line Ls are defined as a1, b1, and c1, respectively. Points where the first, second, and third components 61, 62, and 63 of the second toner mark Y cross the detecting line Ls are a2, b2, and c2, respectively. Referring to FIG. 9 if there is no error in the main scanning direction X, a difference between the times of detecting a1 and b1 (D1a) should be the same as a difference between the times of detecting a2 and b2 (D2a). If the rotating speed of the photosensitive drum 21 and the velocity of the transfer belt 30 are not constant, D1a and D2a will be different from each other even when there is no error in the main scanning direction X between the first and second toner marks K and Y. If an intersection between the first and second components 61 and 62 in the first toner mark K is defined as d1 and an intersection between the first and third components 61 and 63 of the first toner mark K is defined as e1, an area of a triangle T1 defined by the points b1, d1, and a1 is related to an area of a triangle T2 defined by the points b1, e1, and c1 since the third component 63 is parallel to the second component 62. If an intersection between the first and second components 61 and 62 in the second toner mark Y is defined as d2 and an intersection between the first and third components 61 and 63 of the second toner mark Y is defined as e2, an area of a triangle T3 defined by the points b2, d2, and a2 is related to an area of a triangle T4 defined by the points b2, e2, and c2. Based on the above proportional relation, if the difference between the times of detecting b1 and c1 is D1b and the difference between the times of detecting b2 and c2 is D2b, a ratio between D1a and D1b, that is, D1a/D1b, and a ratio between D2a and D2b, that is, D2a/D2b, are equal to each other. That is, the relation D1a/D1b=D2a/D2b is satisfied even when the rotating speed of the photosensitive drum 21 and the velocity of the transfer belt 30 vary. The differences between the times of detecting the first and second components 61 and 62 of the second through fourth toner marks Y, M, and C based on the first toner mark K in the first registration mark 60e may be compensated for by using the above proportional relation as follows:

$$\mathtt{txs1\ =\ D1a}$$

$$\mathtt{txs2\ =\ D2a(D1a+D1b)/(D2a+D2b)}$$

$$\mathtt{txs3\ =\ D3a(D1a+D1b)/(D3a+D3b)}$$

$$\mathtt{txs4\ =\ D4a(D1a+D1b)/(D4a+D4b)}$$

According to an exemplary implementation, a sum of the detection time difference D1a between the first and second components 61 and 62 of the first toner mark K and the detection time difference D1b between the first and third components 61 and 63, that is, D1a + D1b, are the reference values. The ratios between the reference value and the sums of the detection time differences D2a, D3a, and D4a and the detection time differences D2b, D3b, and D4b, that is, (D2a+D2b), (D3a+D3b), and (D4a+D4b), are ratios for compensating the detection time differences D2a, D3a, and D4a between the first and second components 61 and 62 in the second through fourth toner marks Y, M, and C due to errors caused by the variance of the rotating speed of the photosensitive drum 21 and the velocity of the transfer belt 30. The errors of the Y, M, and C toner images in the main scanning direction X based on the K toner image may be calculated using the compensated values of txs1, txs2, txs3, and txs4.

Detection time differences txe1, txe2, txe3, and txe4 of the second registration mark 60e may also be compensated using the above method as follows:

$$\mathtt{txe1\ =\ D1c}$$

$$\mathtt{txe2\ =\ D2c(D1c+D1d)/(D2c+D2d)}$$

$$txe3 = D3c(D1c+D1d)/(D3c+D3d)$$

$$txe4 = D4c(D1c+D1d)/(D4c+D4d)$$

Also, txs1, txs2, txs3, txs4 and txe1, txe2, txe3, txe4 may be compensated for based on a reference value (D) of the sum of the detection time differences between the first and second components 61 and 62 and the differences between times of detecting the first and third components 61 and 63 in the first through fourth toner marks K, Y, M, and C.

$$txs1 = D1a×D/(D1a+D1b)$$

$$txs2 = D2a×D/(D2a+D2b)$$

$$txs3 = D3a×D/(D3a+D3b)$$

$$txs4 = D4a×D/(D4a+D4b)$$

According to an exemplary implementation, the ratios between D and the sums (D1a+D1b), (D2a+D2b), (D3a+D3b), and (D4a+D4b) of the detection time differences D1a, D2a, D3a, and D4a and the detection time differences D1b, D2b, D3b, and D4b are the ratios for compensating for the detection time differences D1a, D2a, D3a, and D4a between the first and second components 61 and 62 in the first through fourth toner marks K, Y, M, and C, respectively. Accordingly the txe1, txe2, txe3, txe4 may be compensated for as detailed below.

$$txe1 = D1c×D/(D1c+D1d)$$

$$txe2 = D2c×D/(D2c+D2d)$$

$$txe3 = D3c×D/(D3c+D3d)$$

$$txe4 = D4c×D/(D4c+D4d)$$

The errors of the K, Y, M, and C toner images with respect to reference positions in the main scanning direction X can be calculated using the compensated values of txs1, txs2, txs3, txs4, txe1, txe2, txe3, and txe4.
The printing width error may then be obtained by subtracting the detection time differences between the first and second components 61 and 62 in the second registration mark 60e from the detection time differences between the first and second components 61 and 62 in the first registration mark 60s. Therefore, the printing width errors of the second, third, and fourth toner marks Y, M, and C with respect to the first toner mark K may be calculated as detailed below. According to an exemplary implementation, txs1, txs2, txs3, txs4, txe1, txe2, txe3, and txe4 are values compensated for variance of the rotating speed of the photosensitive drum 21 and the velocity of the transfer belt 30, as detailed in the calculation of the error in the main scanning direction X.

$$Printing\ width\ error\ of\ second\ toner\ mark\ Y = (txs1-txe1)-(txs2-txe2)$$

...

```
Printing width error of third toner mark M = (txs1-txe1)-
(txs3-txe3)
```

```
Printing width error of fourth toner mark C = (txs1-txe1)-
(txs4-txe4)
```

As described above, the errors in the main scanning direction X and the printing width errors are accurate even if the rotating speed of the photosensitive drum 21 and the velocity of the transfer belt 30 vary during detection of the first and second registration marks 60s and 60e because these errors in the main scanning direction X and the printing width errors are calculated using the compensated txs1, txs2, txs3, txs4, txe1, txe2, txe3, and txe4.

Referring to FIG. 6, if there is no error in the sub-scanning direction Y, time differences tys12 and tys13 and tys14 are the same when tys12, tys13 and tys14 are time differences obtained from detecting the second components 62 of the second, third, and fourth toner marks Y, M, and C with respect to the second component 62 of the first toner mark K in the first registration mark 60s. Also, time differences tye12 and tye13, and tye14 are the same when tye12, tye13 and tye14 are time differences obtained from detecting the second components 62 of the second, third, and fourth toner marks Y, M, and C with respect to the second component 62 of the first toner mark K in the second registration mark 60e. If the originally designated detection time differences between the second component 62 of the first toner mark K and the second components 62 of the second, third, and fourth toner marks Y, M, and C are Ty2, Ty3, and Ty4, respectively, the errors in the sub-scanning direction Y based on the first toner mark K of the first registration mark 60s may be calculated as follows:

```
Error of second toner mark (Y) in sub-scanning direction Y
= {(Ty2-tys12)+(Ty2-tye12)}/2
```

```
Error of third toner mark (M) in sub-scanning direction Y
= {(Ty3-tys13)+(Ty2-tye13)}/2
```

```
Error of fourth toner mark (C) in sub-scanning direction Y
= {(Ty4-tys14)+(Ty2-tye14)}/2
```

A skew is an inclination of the main scanning direction X. If no skew is generated, the time difference tys12 between detecting the second component 62 of the first toner mark K and the second component 62 of the second toner mark Y in the first registration mark 60s is the same as the time difference tye12 between detecting the second component 62 of the first toner mark K and the second component 62 of the second toner mark Y in the second registration mark 60e. If the skew is generated, time differences tys12 and tye12 are different from each other, and the difference between tys12 and tye12 (tys12-tye12) is a skew amount.

Therefore, skew amounts of the second, third, and fourth toner marks Y, M, and C based on the first toner mark K may be calculated as follows.

```
Skew amount of second toner mark (Y) = tys12-tye12
```

```
Skew amount of third toner mark (M) = tys13-tye13
```

```
Skew amount of fourth toner mark (C) = tys14-tye14
```

Table 1 shows equations for calculating the errors of the second through fourth toner marks Y, M, and C in the main scanning direction X, in the sub-scanning direction Y, in printing widths, and in skew amounts with respect to the first toner mark K. According to an exemplary implementation, values of txs1, txs2, txs3, txs4, txe1, txe2, txe3, and txe4 are compensated for in consideration of the possible variance of the rotating speed of the photosensitive drum 21 and the velocity of the transfer belt 30.

[Table 1]

|  | Error in main scanning direction X | Error in sub-scanning direction Y | Printing width error | Skew error |
|---|---|---|---|---|
| Second toner mark | txs1-txs2 | {(Ty2-tys12)+(Ty2-tye12)}/2 | (txs1-txe1)-(txs2-txe2) | tys12-tye12 |
| Third toner mark | txs1-txs3 | {(Ty3-tys13)+(Ty3-tye13)}/2 | (txs1-txe1)-(txs3-txe3) | tys13-tye13 |
| Fourth toner mark | txs1 - txs4 | {(Ty4-tys14)+(Ty3-tye14)}/2 | (txs1-txe1)-(txs4-txe4) | tys14-tye14 |

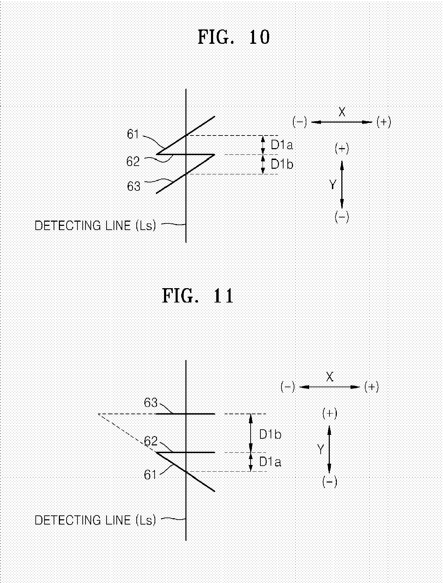

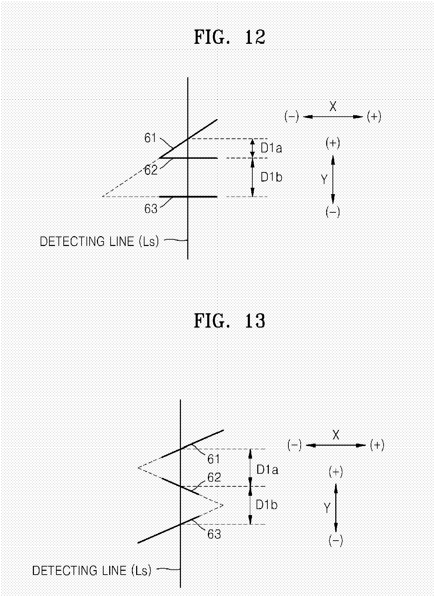

Shapes of the first and second registration marks 60s and 60e are not limited to the examples illustrated in FIG. 6. FIGS. 10 through 13 are diagrams of modified examples of registration marks according to exemplary embodiments of the present invention. Although only one toner mark of the registration marks is illustrated in FIGS. 10 through 13, those who are skilled in the art may construct a complete configuration of toner marks as illustrated in FIG. 9 using the toner mark illustrated in FIGS. 10 through 13. FIG. 10 illustrates a toner mark of a registration mark where the first component 61 is inclined with respect to the main scanning direction X and the sub-scanning direction Y, the second component 62 is substantially parallel to the main scanning direction X, and the third component 63 is parallel to the first component 61. Referring to FIGS. 11 and 12, the first component 61 is inclined with respect to the main scanning direction X and the sub-scanning direction Y, the second component 62 is substantially parallel to the main scanning direction X, and the third component 63 is parallel to the second component 62. Referring to FIG. 13, the first component 61 is inclined with respect to the main scanning direction X and the sub-scanning direction Y, the second component 62 is inclined with respect to the main scanning direction X, the sub-scanning direction Y, and the first component 61, and the third component 63 is parallel to the first component 61. When a difference between the detection times of the first and second components 61 and 62 is D1a and a difference between the detection times of the second and third components 62 and 63 is D1b, detection time differences txs1, txs2, txs3, txs4, txe1, txe2, txe3, and txe4 between the first and second components 61 and 62 of the first and second registration marks 60s and 60e, the errors of which are removed, may be calculated using the method illustrated previously with reference to FIG. 9. In addition, a variety of modified examples of the first and second registration marks 60s and 60e can be used.

Compensation for errors generated due to variance of the rotating speed of the photosensitive drum 21 and the velocity of the transfer belt 30 may be made by using a ratio. The ratio between a reference value and the larger value of the detection time difference of the first and second components 61 and 62 and the detection time difference of the second and third components 62 and 63 is set as the compensation ratio. Then, the compensation ratio is multiplied with the detection time differences D1a, D2a, D3a, and D4a of the first and second components of a plurality of toner marks K, Y, M, and C, and thus, the compensated detection time differences txs1, txs2, txs3, txs4, txe1, txe2, txe3, and txe4 of the first and second components 61 and 62 can be obtained. In one of the plurality of toner marks K, Y, M, and C, the larger value of the detection time difference of the first and third components 61 and 63 and the detection time difference of the second and third components 62 and 63 may be the reference value. Otherwise, an originally designated value (D) of the larger value of the detection time differences of the first and third components 61 and 63 and of the second and third components 62 and 63 in the plurality of toner marks K, Y, M, and C can also be set as the reference value.

The system controller 102 controls the printing apparatus in order to compensate for the error in the main scanning direction X, the error in the sub-scanning direction Y, the printing width error, and the skew amount calculated by the color registration error detector 101.

The system controller 102 controls the exposing device 10 so that a scanning line of the exposing device 10 can be moved in the +X or -X direction in order to compensate for the error in the main scanning direction X. An example of compensating for the error in the main scanning direction X is discussed below. The system controller 102 has a left margin register value for determining a left margin on the image display region. The system controller 102 controls the time at which the scanning operation of the exposing device 10 is initiated in the main scanning direction X according to the left margin register value to adjust for the error in the main scanning direction X. If a default value of the left margin register is 500, the system controller 102 sets the left margin register value, for example, as 400 or 600, in order to compensate for the error in the main scanning direction X. If, for example, the left margin register value is set as 400, the scan initiating position of the exposing device 10 is moved 100 dots in the -X direction. If the left margin register value is set as 600, the scan initiating position of the exposing device 10 is moved 100 dots to +X direction. As described above, positions of the K, Y, M, and C toner images can be matched to each other in the main scanning direction X by compensating for the error in the main scanning direction X.

The system controller 102 can compensate for the error in the sub-scanning direction Y by delaying or starting earlier the scanning of the corresponding toner image by the exposing device 10 in the sub-scanning direction Y. An example of compensating for the error in the sub-scanning direction Y is discussed below. The system controller 102 has a top margin register value for determining the top margin on the image display region. The system controller 102 adjusts the scan initiating point of the exposing device 10 according to the top margin register value in order to compensate for the Y offset. When a default value of the top margin register is, for example, 100, the system controller 102 sets the top margin register value, for example, as 120 or 80, in order to compensate for the detected error in the sub-scanning direction Y. If the top margin register value is set as 120, the exposing device 10 delays the start of scanning operation by 20 dots in the sub-scanning direction Y, and thus, the paper is moved 20 dots in the - Y direction. If the top margin register value is set as 80, the exposing device 10 starts the scanning 20 dots earlier, and thus, the paper is moved 20 dots to +Y direction. As described above, the positions of the K, Y, M, and C toner images can be matched to each other in the sub-scanning direction Y by compensating for the errors in the sub-scanning direction Y using the above method.

Controlling a clock frequency of the image information signal is used to compensate for the printing width error. For example, if a time for scanning one dot is set as 50 ns, the time may be reset to 51 ns in order to increase the printing width. To do this, the clock frequency of the image information signal is set as 1/51 ns. The time for scanning one dot can also be set as, for example, 49 ns, in order to reduce the printing width. This is accomplished by setting the clock frequency of the image information signal 1/49 ns. Lengths of the the K, Y, M, and C toner images can be matched with each other in the main scanning direction X by compensating for the printing width error using the above method.

Controlling the light reflecting angle of the reflection mirror (not shown) in the exposing device 10 compensates for the skew amount. Thus, the printing apparatus may include a driving unit for moving the reflection mirror. In general, the skew amount is not compensated for in the printing process. Instead, the skew amount is detected during assembly of the printing apparatus, and then, an installation angle of the exposing device 10 or installation angles of the transfer belt 30 and the photosensitive drum 21 are controlled according to the detected skew amount.

As described above, in the printing apparatus and method for detecting color registration error according to an exemplary embodiment of the present invention, the detection time differences of the registration marks are compensated for using a ratio of the time differences. Thus, the error in the main scanning direction and the printing width error can be precisely calculated even when the rotating speed of the photosensitive drum and the velocity of the transfer belt vary during detection of the registration marks. Therefore, the error in the main scanning direction and the printing width error may be compensated for precisely, and stable and uniform printing quality may be obtained.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1.  A printing apparatus comprising:

    at least one electrostatic latent image forming unit (10) for forming electrostatic latent images on a photosensitive medium;
    a plurality of developing units (20) for developing the electrostatic latent images to form a plurality of toner images;
    a transfer medium (30), onto which the plurality of toner images are transferable; and

a color registration error detecting unit (100) for detecting registration marks (60s/60e) comprising a plurality of toner marks and formed on the transfer medium (30) to detect color registration errors of color images,

wherein each toner mark of the registration mark comprises:

a first component (61) inclined with respect to a main scanning direction (X) and a sub-scanning direction (Y);
a second component (62) spaced apart from the first component (61) in the sub-scanning direction (Y), and inclined with respect to the first component (61); and
a third component (63) parallel to at least one of the first component (61) and the second component (62).

2. The printing apparatus of claim 1, wherein the registration mark comprises a first registration mark (60s) and a second registration mark (60e) spaced a distance apart from each other in the main scanning direction (X).

3. A method of detecting a color registration error of a printing apparatus, which comprises at least one electrostatic latent image forming unit (10) for forming electrostatic latent images on a photosensitive medium; a plurality of developing units (20) for developing the electrostatic latent images to form a plurality of toner images; and a transfer medium (30), onto which the plurality of toner images are transferred, the method comprising:

forming a first registration mark (60s) comprising a plurality of toner marks;
detecting a first, second, and third component (61,62,63) of a plurality of toner marks using a sensor (80s/80e) facing the transfer medium (30);
compensating for detection time differences of the first and second components (61,62) in the plurality of toner marks by removing a detection error generated due to a variance in velocity of the photosensitive medium and the transfer medium (30) from the detection time differences of the first and second components (61,62) in the plurality of toner marks; and
calculating color registration errors of the plurality of toner images in the main scanning direction (X) using the compensated detection time differences of the first and second components (61,62) of the plurality of toner marks.

4. The method of claim 3, wherein the compensating of the detection time differences between the first and second components (61,62) comprises:

defining a ratio between the larger one of the detection time difference of the first and third components (61,63) and the detection time difference of the second and third components (62,63), and a reference value as a compensation ratio; and
setting a value as the compensated detection time differences of the first and second components (61,62) of the plurality of toner marks.

5. The method of claim 4, wherein the larger one of the detection time differences of the first and third components (61,63) and of the second and third components (62,63) in at least one of the plurality of toner marks is set as the reference value.

6. The method of claim 4, wherein a designated value of the larger one of the detection time differences of the first and third components (61,63) and of the second and third components (62,63) of the plurality of toner marks is set as the reference value.

7. The method of any one of claims 3 to 6, further comprising:

forming a second registration mark (60e) comprising a plurality of toner marks spaced a distance apart from the first registration mark (60s) in the main scanning direction (X);
compensating for the detection time differences of the first and second components (61,62) in the plurality of toner marks of the second registration mark (60e); and
calculating a printing width error from the compensated detection time differences of the first and second components (61,62) in the first and second registration marks (60s/60e).

8. The method of any one of claims 3 to 7, wherein each toner mark comprises:

a first component (61) inclined with respect to a main scanning direction (X) and a sub-scanning direction (Y);
a second component (62) spaced apart from the first component (61) in the sub-scanning direction (Y), and inclined with respect to the first component (61); and
a third component (63) parallel to one of the first component (61) and the second component (62), on the transfer medium (30) that moves in the sub-scanning direction (Y).

9. The method of any one of claims 3 to 8, wherein detection time differences are compensated for based on the fact that ratios between the detection time difference between the first and second components (61,62), the detection time difference between the first and third components (61,63), and the detection time difference between the second and third components (62,63) are not affected by the variance in velocity of the photosensitive medium and the transfer medium (30).

10. The method of any one of claims 3 to 9, wherein the differences between the times of detecting the first and second components (61,62) of second through fourth toner marks Y, M, and C based on a first toner mark K in a first registration mark (60s) may be compensated for by using a proportional relation as follows:

```
txs1 = D1a

txs2 = D2a(D1a+D1b)/(D2a+D2b)

txs3 = D3a(D1a+D1b)/(D3a+D3b).

txs4 = D4a(D1a+D1b)/(D4a+D4b)
```

11. The method of any one of claims 3 to 10, wherein errors in a sub-scanning direction Y which are based on a first toner mark K of the first registration mark (60s) may be calculated as follows:

```
Error of second toner mark (Y) in sub-scanning
direction Y = {(Ty2-tys12)+(Ty2-tye12)}/2

Error of third toner mark (M) in sub-scanning
direction Y = {(Ty3-tys13)+(Ty2-tye13)}/2

Error of fourth toner mark (C) in sub-scanning
direction Y = {(Ty4-tys14)+(Ty2-tye14)}/2.
```

12. The method of any one of claims 3 to 11, wherein errors in a main scanning direction X may be calculated as follows:

```
Printing width error of second toner mark Y =
(txs1-txe1)-(txs2-txe2)

Printing width error of third toner mark M =
(txs1-txe1)-(txs3-txe3)
```

```
Printing width error of fourth toner mark C =
(txs1-txe1)-(txs4-txe4).
```

13. The method of any one of claims 4 to 12, wherein the set value is obtained by multiplying the detection time differences of the first and second components (61,62) of the plurality of toner marks by the compensation ratio.

FIG. 1

# FIG. 2

## FIG. 3

## FIG. 4

# FIG. 5

## FIG. 6

## FIG. 7

# FIG. 8

62
61
63
K
Y
62
61
63

txs1

txs2

DETECTING LINE (Ls)

# FIG. 9

60s

T1
62 · a1
d1 · b1
61 · c1
63 T3 T2 e1
K
d2 62 · a2
61 · b2
· c2
Y 63 T4 e2
M
C

DETECTING LINE (Ls)

60e

K
Y
M
C

DETECTING
LINE (Le)

D1a
D1b
D2a
D2b
D3a
D3b
D4a
D4b

D1c
D1d
D2c
D2d
D3c
D3d
D4c
D4d

(−) ◄— X —► (+)

(+)
Y
(−)

# FIG. 10

61
62
63

D1a
D1b

(−) ← X → (+)

(+)
Y
(−)

DETECTING LINE (Ls)

# FIG. 11

63
62
61

D1b
D1a

(−) ← X → (+)

(+)
Y
(−)

DETECTING LINE (Ls)

FIG. 12

FIG. 13